# EUROPÄISCHE PATENTSCHRIFT

(11) **EP 1 858 761 B1**
(45) Veröffentlichungstag und Bekanntmachung des Hinweises auf die Patenterteilung: **22.05.2013**
(21) Anmeldenummer: 06723187.8
(22) Anmeldetag: 03.03.2006
(51) Int. Cl.: B65B 61/18

(54) **VERFAHREN UND VORRICHTUNG ZUM AUFBRINGEN UND FIXIEREN VON FUNKTIONSELEMENTEN**
METHOD AND DEVICE FOR APPLYING AND FIXING FUNCTIONAL ELEMENTS
PROCEDE ET DISPOSITIF PERMETTANT D'APPLIQUER ET DE FIXER DES ELEMENTS FONCTIONNELS

(30) Priorität: 08.03.2005 DE 102005010466
(43) Veröffentlichungstag der Anmeldung: 28.11.2007
(73) Patentinhaber: Kalle GmbH, 65203 Wiesbaden (DE)
(72) Erfinder: AUF DER HEIDE, Christian, 49080 Osnabrück (DE); AUF DER HEIDE, Dirk, 45954 Alfhausen (DE); KALLWEIT, Jürg-Heinrich, 49076 Osnabrück (DE); KOLODZIEJ, Wolfgang, 49326 Gesmold (DE)
(74) Vertreter: Zounek, Nikolai
(86) Internationale Anmeldenummer: PCT/EP2006/001942
(87) Internationale Veröffentlichungsnummer: WO 2006/094713

(56) Entgegenhaltungen:
- EP-A- 1 009 665
- WO-A-03/057591
- DE-A1- 3 733 276
- DE-A1- 10 233 518
- DE-A1- 19 653 779
- DE-A1- 19 706 317
- US-A- 4 990 200
- US-A- 5 473 857

## Beschreibung

Die Erfindung betrifft ein Verfahren zum Aufbringen und Fixieren von Funktionselementen auf eine, ein Produkt umgebende Hülle und eine Vorrichtung hierfür.

Bekannte Vorrichtungen dieser Art haben die Aufgabe, Etiketten auf Produkte aufzukleben.

DE-A-2013016 offenbart eine Vorrichtung, mittels der ein Gegenstand mit Leim bedruckt wird und hieran anschließend ein Etikett auf die mit Leim bedruckte Stelle aufgedrückt wird. Die Vorrichtung gemäß DE-A-2013016 wird ausschließlich mechanisch angetrieben und gesteuert. DE-A-19653779 lehrt eine Vorrichtung zum Etikettieren von Käselaiben, bei der zunächst Leim mittels Düsen auf die Käselaibe aufgetragen wird und hieran anschließend Etiketten mittels einer schwenkbaren Vorrichtung auf die beleimten Stellen des Käselaibes aufgedrückt werden. Hierbei werden die Käselaibe während des Beleimens und Aufbringen der Etiketten auf einem Förderband transportiert. Die Zuführung der Etiketten erfolgt einzeln aus einem Stapel oder mittels eines zu zerteilenden Endlosbandes.

Aus der DE-A-19706317 ist eine Vorrichtung bekannt, bei der Heißkleber mittels Düsen auf Etikettiergut, wie Paletten, Kisten, Kartonagen, Fässer, Flaschen und dergleichen aufgetragen wird. Hiernach wird mittels eines Etikettengreifers ein Etikett auf die mit Heißldeber beaufschlagte Stelle aufgedrückt. Vorzugsweise wird hierbei das Etikett vor dem Abkühlen des Heißldebers aufgebracht. Gemäß DE-A-19706317 weist der Etikettengreifer eine Vakuumplatte zur Ergreifung des Etiketts auf. Vorzugsweise handelt es sich bei dem Etikettenspender um einen Endlosetikettenspender mit Trägerband.

Des weiteren offenbart DE-A-3733276 eine Wursthülle aus Naturdarm, auf deren Außenfläche eine Textil- und/oder Kunstdarmfläche aufgenäht oder aufgeklebt ist. Die Aufgabe der DE-A-3733276 besteht darin, die Vorteile von Naturdarm und Textil- bzw. Kunstdarm - insbesondere die gute Bedruckbarkeit von künstlichen Därmen - zu kombinieren.

In der US 5,473,857 ist eine Vorrichtung zum vollautomatischen Aufbringen und Fixieren eines Funktionselements auf einer Hülle, die wiederum ein Produkt umschließt, offenbart. Das Funktionselement ist als Verschlußstück für eine Öffnung in der Hülle ausgebildet. Es ist dabei nicht flächig mit der Hülle selbst verbunden. Konkret beschrieben sind Kartonverpackungen für Saft oder Milch, die an ihrem oberen Ende mit einer wiederverschließbaren Ausgießöffnung aus Kunststoffmaterial versehen sind.

Auch in der WO 98/36977 sind ein Verfahren und eine Vorrichtung zum Anbringen eines wiederverschließbaren Drehverschlusses an eine Faltverpackung aus folienbeschichtetem Karton beschrieben.

Gegenstand der US 4,990,200 wie auch der WO 03/0577591 ist ein Verfahren und eine Vorrichtung zum Anbringen eines wiederverschließbaren Deckels an einer Ausgießöffnung einer Kartonverpackung.

Die aus dem Stand der Technik bekannten Verfahren und Vorrichtungen dienen der Etikettierung von Produkten oder zielen darauf ab, die Bedruckbarkeit der Produkthül le zu verbessern. Ein Verfahren und eine Vorrichtung zum Anbringen von mechanischen Funktionselementen wird nicht beschrieben. Die Bedeutung mechanischer Funktionselemente liegt darin, dass sie es beispielsweise ermöglichen, Hüllen zu öffnen und wieder zu verschließen, und die Produkte aufzuhängen.

Der Erfindung liegt die Aufgabe zugrunde, eine Vorrichtung und ein Verfahren bereitzustellen, die es ermöglichen, mechanische Funktionselemente auf eine, ein Produkt umschließende Hülle aufzubringen und zu fixieren.

Diese Aufgabe wird gelöst mittels einer Vorrichtung gemäß Auspruch 1 und eine Verfarhen gemäß Anspruch 8.

Zudem wird im Rahmen der Erfindung ein Verfahren bereitgestellt, mit dem die der Hülle zugewandte Fläche des Funktionselements teil- oder ganzflächig mit der Hülle permanent kraftschlüssig haftend verbunden wird.

Eine Vielzahl von Produkten wird mit einer Hülle verpackt, wobei es häufig wünschenswert ist, dem Produkt und/oder der Hülle bestimmte mechanische Funktionalitäten und Eigenschaften zu verleihen. Bei Würsten z.B. erweist es sich als vorteilhaft, wenn der Endverbraucher zwecks

Verzehr die Wursthülle auf einfache Weise ohne Zuhilfenahme eines Messers öffnen und entfernen kann. Dies wird erreicht, indem die Wursthülle mit einer Aufreißlasche versehen wird. Durch kräftigen Zug an der Aufreißlasche wirkt eine zur Oberfläche senkrecht gerichtete Kraft auf die Wursthülle ein, wodurch ein Riss entsteht. Zusätzlich kann die Wursthülle mit einer Soll-Reißlinie in Form einer Mikroperforation ausgestattet werden, um das Öffnen zu erleichtern.

Bei der automatischen Verpackung von Produkten im industriellen Maßstab werden die Produkte mit einer Hülle oder Folie, die in der Regel aus transparentem Kunststoff besteht, umhüllt und hieran anschließend die Hülle verschlossen.

Im Rahmen der Erfmdung werden insbesondere Wursthüllen in Form eines nahtlosen, ein- oder mehrschichtigen Folienschlauches mit einer Gesamtdicke von 20 bis 120 µm, bevorzugt von 30 bis 80 µm, verwendet. Der nahtlose Folienschlauch besteht aus thermoplastischen organischen Kunststoffen, beschichteten Textilmaterialien oder Cellulose, wobei die Cellulose gegebenenfalls faserverstärkt ist.

Die zur Verpackung bestimmten Hüllen und Folien werden den automatischen Verpackungsmaschinen in der Regel durch Abwickeln einer auf eine Walze aufgewickelten Schlauchhülle oder Folie zugeführt. Insbesondere werden Wurstprodukte auf Wurstfüllmaschinen in Schlauchhüllen verpackt, wobei die Schlauchhülle in geraffter Form zugeführt wird.

Das Aufbringen von Funktionselementen auf die Hülle vor oder während der automatischen Verpackung ist technisch kaum durchführbar. Dementsprechend werden die Funktionselemente nach der Verpackung und einem gegebenenfalls anschließenden Gar-, Brüh- oder Reifeprozess auf die, die Produkte einschließende Hülle aufgebracht.

Bei dem erfindungsgemäßen Verfahren werden von einer Hülle umschlossene Produkte mittels einer Transportvorrichtung einer Bestückungs-/Klebemittelvorrichtung zugeführt, wo zunächst eine bestimmte Menge an Kleber auf eine definierte Verbindungsfläche auf der Hülle aufgetragen wird. Hieran anschließend wird ein Funktionselement mit der Verbindungsfläche in Druckkontakt gebracht, wonach die Transportvorrichtung das Produkt weiter transportiert, um nachgeschaltete Verfahrensschritte wie das Verpacken des Produkts in ein Versandbehältnis vorzunehmen.

Das Verfahren kann für Produkte verschiedenster Art angewendet werden, wobei insbesondere Nahrungsmittel, und besonders bevorzugt Wurstwaren in Betracht kommen.

Bei den Funktionselementen gemäß der Erfindung handelt es sich um solche mit mechanischer Funktionalität. Insbesondere zielt die Erfindung ab auf mechanische Funktionselemente wie Aufreißlaschen zum Öffnen der Hülle, Halterungen, wie Schlaufen zur hängenden Lagerung der Produkte und wiederverschließbare Abdeckungen, wie selbstklebende Laschen.

Eine Vorrichtung zur Durchführung des erfindungsgemäßen Verfahrens besteht aus einer Transport- und einer Bestückungs-/Klebemittelvorrichtung sowie einer Steuerung und diversen Sensoren.

Im Falle von Produkten mit einer Form, die eine stabile Lagerung auf einer flachen Unterlage ermöglicht, ist die Transportvorrichtung als Förderband ausgeführt. Zur exakten Aufbringung der Funktionselemente muss die genaue Lage der Produkte auf dem Förderband ermittelt werden. Hierzu stehen grundsätzlich zwei Methoden zur Auswahl:
A) definierte regelmäßige Anordnung der Produkte auf dem Förderband in Kombination mit fest programmierten Bewegungsabläufen einzelner Elemente bzw. Einheiten der Vorrichtung.
B) automatische Erfassung der Produktposition mittels Sensoren in Kombination mit variablen Bewegungsabläufen einzelner Elemente bzw. Einheiten der Vorrichtung.

Beide Methoden A) und B) sind im Stand der Technik hinlänglich bekannt, wobei Methode A) wegen geringerer Komplexität und Kosten bevorzugt wird.

Bei Produkten mit komplexer Form, wie etwa gekrümmten Würsten, ist eine stabile Lagerung auf einer ebenen Unterlage nicht immer möglich. Für derartige Produkte wird die Transportvorrichtung in einer bevorzugten Ausführung der Erfindung aus mehreren umlaufenden, gleichartigen Paletten zusammengesetzt, wobei jede Palette eine oder mehrere, in regelmäßigem Abstand und parallel zueinander positionierte Halterungen aufweist, die z.B. in der Palette versenkt sind und die Produkte im wesentlichen formschlüssig aufnehmen. Analog zu Methode A) erlaubt eine derartige Transportvorrichtung es, die Bewegungsabläufe der Anlagenteile fest zu programmieren. In einer besonderen Ausführungsform besteht die Transportvorrichtung aus einem oder mehreren Modulbändern, wobei die Modulbänder mit Formschultern zur regelmäßig beabstandeten und parallelen Positionierung der zu bestückenden Produkte ausgerüstet sind.

Die erfindungsgemäße Bestückungs-/Klebemittelvorrichtung umfasst eine Klebeeinrichtung, eine Greifvorrichtung und einen Elementspender.

Die Klebeeinrichtung besteht aus einer oder mehreren auf eine verstell- und schwenkbare Halterung montierten Düsen. Die Düsen sind über eine Zuleitung an einen mit einer Dosiervorrichtung ausgerüsteten Kleberbehälter angeschlossen. Z.B. ist die Dosiervorrichtung als Pneumatikstempel ausgestaltet, der durch geregelten Vorschub Kleber aus dem zyliliderförmigen Kleberbehälter aus der, über eine Zuleitung an den Kleberbehälter angeschlossenen Düse abgibt.

Die Greifvorrichtung umfasst einen Vakuumsaugkopf, dessen Form und Größe sowohl an die Funktionselemente wie auch die Produkte angepasst ist. Hierbei hat sich für den Vakuumsaugkopf eine leicht konkav gekrümmte Ansaugfläche als besonders geeignet für Wurstwaren und flexible flächige Funktionselemente erwiesen. Die Saugwirkung wird durch Unterdruck in mehreren Bohrungen in der Ansaugfläche erhalten. Über eine Vakuumleitung ist der Vakuumsaugkopf an eine Pumpe angeschlossen. Der Vakuumsaugkopf wird mittels eines mehrachsigen Aktuators bewegt. In einer bevorzugten Ausführungsform setzt sich der Aktuator aus zwei Linearantrieben und einer zwischengeschalteten Drehachse zusammen, wobei der zweite Linearantrieb zur Verfahrung des Vakuumsaugkopfes zwischen den Anstellpositionen unterhalb des Elementspenders und oberhalb der Transportvorrichtung dient. Die Drehachse ist mit dem zweiten Linearantrieb mechanisch gekoppelt, z.B. über einen Exzenter. Die mechanische Kopplung ist so ausgelegt, dass die Drehachse bei der Verfahrung des Vakuumsaugkopfes zwischen gegenüberliegenden Anstellpositionen eine Drehung um etwa 180° ausführt. In der Anstellposition unterhalb des Elementspenders hat der erste Linearantrieb die Aufgabe, den Vakuumsaugkopf mit dem am Ausgang des Elementspenders befindlichen Funktionselement in Kontakt zu bringen. Durch Zuschalten des Vakuums wird das Funktionselement vom Vakuumsaugkopf angesogen und festgehalten. Hierauf wird der Vakuumsaugkopf bzw. der erste Linearantrieb zurückbewegt und mittels des zweiten Linearantriebs die gegenüberliegende Anstellposition oberhalb der Transportvorrichtung angefahren. Hierbei wird die Drehachse und damit der Vakuumsaugkopf um etwa 180° gedreht. In der Anstellposition oberhalb der Transportvorrichtung wird der erste Linearantrieb ausgefahren, um den Vakuumsaugkopf und damit das auf ihm angesaugte Funktionselement auf das Produkt aufzudrücken. Hierbei wird das Vakuum von der Steuerung zu einem fest programmierten Zeitpunlct oder durch ein Sensorsignal ausgeschaltet und das Funktionselement freigegeben. Bevorzugt werden der erste und zweite Linearantrieb pneumatisch betrieben. Insbesondere beim ersten Linearantrieb bietet der pneumatische Betrieb den Vorteil, dass über den Gasdruck die Kontaktkraft, die der Vakuumsaugkopf auf die Produkte ausübt, einstellbar ist.

Im folgenden wird die Erfindung anhand von zeichnerisch dargestellten Ausführungsbeispielen näher erläutert. Es zeigen:
Fig. 1 ein Flussdiagramm des erfindungsgemäßen Verfahrens;
Fig. 2 eine schematische Ansicht einer erfindungsgemäßen Vorrichtung;
Fig. 3 eine perspektivische Ansicht einer bevorzugten Ausführungsform der erfindungsgemäßen Vorrichtung; und
Fig. 4a bis 4c drei Ausführungsformen des Funktionselements.

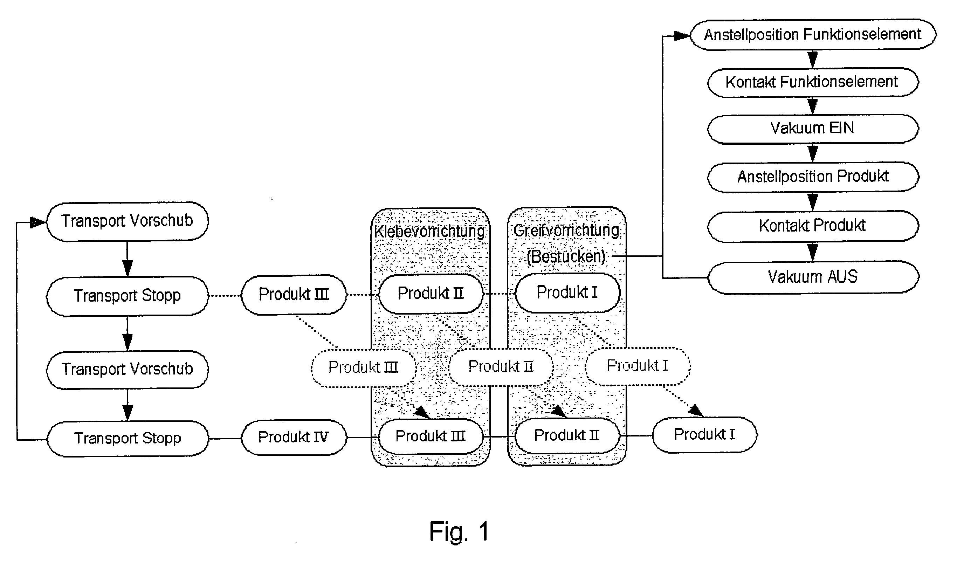

In Fig. 1 sind die einzelnen Schritte des erfindungsgemäßen Verfahrens für den Fall illustriert, dass der Transport der Produkte in nur einer Reihe erfolgt. Hierbei werden drei auf der Transportvorrichtung aufgereihte Produkte, die mit den Ziffern I, II und III bezeichnet sind, betrachtet. Produkt I ist bereits mit Kleber versehen. Die Transportvorrichtung führt einen festgelegten Vorsehub aus und stoppt, wobei Produkt I an die für das Aufbringen des Funktionselementes vorgesehene Position gelangt. Zugleich wird das nachfolgende Produkt II in die für den Auftrag des Klebers vorgesehene Position transportiert. Hierauf wird Kleber auf Produkt II aufgetragen und Produkt I mit einem Funktionselement versehen. Diese beiden Verfahrensschritte werden simultan ausgeführt. Danach erfolgt der nächste Vorschub, bei dem das fertige Produkt I aus dem Bereich der Bestückungs-/Klebemittelvorrichtung herausgeführt wird, das Produkt II in die Bestückungsposition und Produkt III in die Klebeposition gelangt. Der obige Ablauf wird wiederholt, bis alle Produkte mit einem Funktionselement versehen sind.

Zusätzlich ist in Fig. 1 der Ablauf des Bestückungsvorgangs dargestellt, wobei der Vakuumsaugkopf zunächst am Ausgang des Elementspenders positioniert ist und mit dem dort befindlichen Funktionselement in Kontakt steht. Hierauf wird das Vakuum zugeschaltet und das Funktionselement angesaugt. Nun wird der Vakuumsaugkopf mit dem Funktionselement in eine Anstellposition über dem Produlct verfahren, in Druckkontakt mit dem Produkt gebracht und das Vakuum ausgeschaltet, so dass das Funktionselement freigegeben wird und auf dem mit Kleber versehenen Produkt haften bleibt. Schließlich wird der Vakuumsaugkopf in eine Anstellposition unterhalb des Elementspenders gefahren und der Ablauf beginnt von neuem.

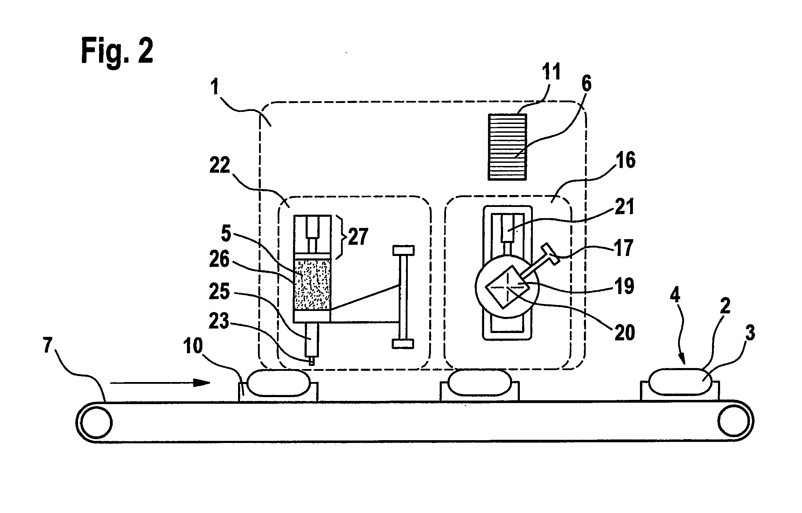

Fig. 2 zeigt eine schematische Ansicht einer erfindungsgemäßen Vorrichtung mit einer Bestückungs-/Klebemittelvorrichtung 1, einer Transportvorrichtung 7 und von jeweils einer Hülle 2 umschlossenen Produkten 3. Um die Produkte 3 lagestabil auf der Transportvorrichtung 7 zu führen ist diese mit Halterungen 10 ausgerüstet, wobei die Halterungen 10 so ausgestaltet sind, dass sie die Produkte 3 formschlüssig aufnehmen. Die Bestückungs-/Klebemittelvorrichtung 1 umfasst eine Klebeeinrichtung 22, eine Greifvorrichtung 16 und einen Elementspender 11.

Die Klebeeinrichtung 22 besteht aus einer auf einer verstell- und schwenkbaren Düsenhalterung 24 montierten Düse 23, wobei die Düse 23 über eine Zuleitung 25 mit einem Kleberbehälter 26 verbunden ist. Der Kleberbehälter 26 ist mit einer Dosiervorrichtung 27 ausgerüstet.

Die Greifvorrichtung 16 besteht aus einem Vakuumstempel 17, der auf einen mehrachsigen Aktuator montiert ist. In einer bevorzugten Ausführung umfasst der Aktuator zwei Linearantriebe 19 und 21 mit einer zwischengeschalteten Drehachse 20.

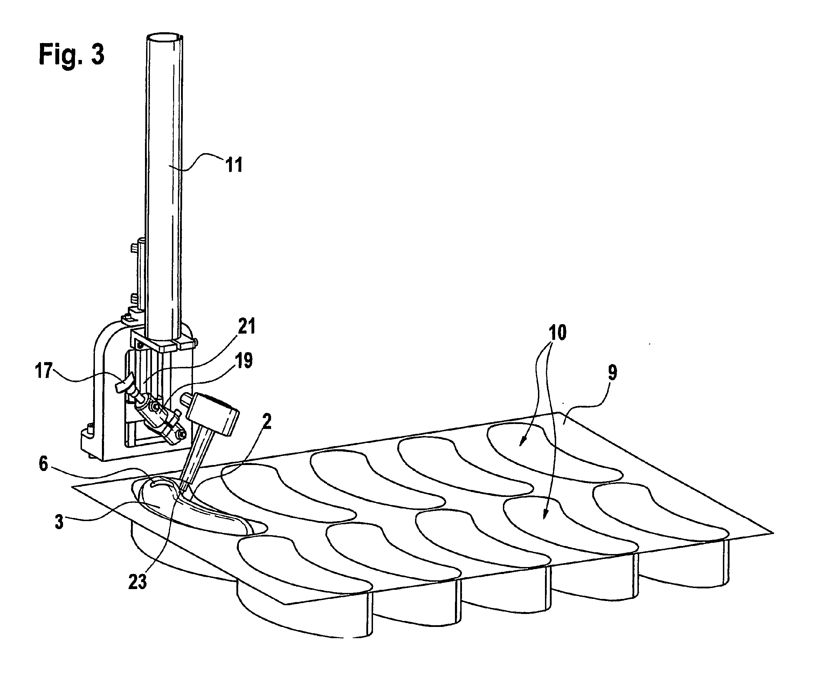

Fig. 3 zeigt eine perspektivische Ansicht einer bevorzugten Ausführungsform der erfindungsgemäßen Vorrichtung, wobei übereinstimmende Bauteile mit den gleichen Bezugszahlen wie in Fig. 2 belegt sind und daher zur Vermeidung von Wiederholungen nicht mehr beschrieben werden.

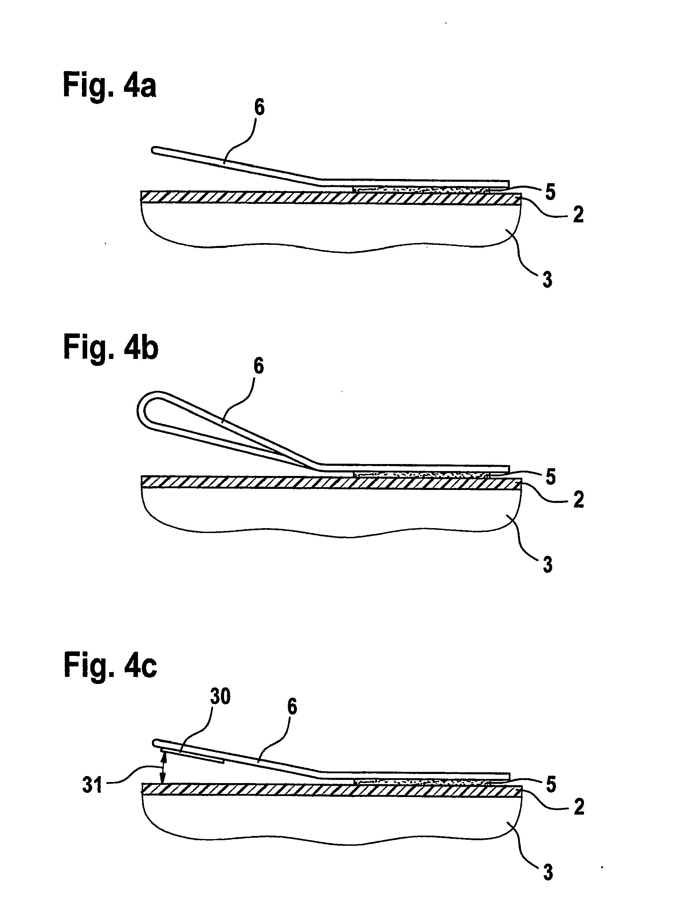

Fig. 4a zeigt schematisch einen Schnitt durch ein als Aufreißlasche ausgeführtes Funktionselement 6, das durch ein Klebemittel 5 mit einer ein Produkt 3 umgebenden Hülle 2 kraftschlüssig haftend verbunden ist. Der mit der Hülle 2 nicht verbundene Teil des Funktionselements 6 dient der menschlichen Hand als Griffbereich.

In ähnlicher Weise wie Fig. 4a zeigt Fig. 4b ein als Halterung ausgeführtes Funktionselement 6, das bevorzugt mit einer Schlaufe zur hängenden Lagerung des Produkts 3 ausgestattet ist; die Bezugszahlen 2, 3 und 5 haben die gleiche Bedeutung wie in Fig. 4a.

Fig. 4c schließlich zeigt ein als wiederverschließbare Abdeckung ausgeführtes Funktionselement 6, das bevorzugt mit einer selbstklebenden Beschichtung 30 ausgerüstet ist, wobei die Beschichtung 30 gute Haftung auf der Hülle 2 aufweist. Der Pfeil mit Bezugszahl 31 in Fig. 4c illustriert den Vorgang des Schließens und Öffnens der wiederverschließbaren Abdeckung; die Bezugszahlen 3 und 5 haben die gleiche Bedeutung wie in Fig. 4a.

## Patentansprüche

1. Vorrichtung zum vollautomatischen Aufbringen und Fixieren eines Funktionselements (6) mit mechanischer Funktionalität auf einer ein Produkt (3) umschließenden Hülle (2), umfassend eine Transportvorrichtung (7) für das Produkt und eine Bestückungs-/Klebemittelvorrichtung (1), mit der ein Klebemittel (5) auf eine Verbindungsfläche (4) auf der Hülle aufbringbar ist, **dadurch gekennzeichnet, dass** die Hülle ein Folienschlauch aus einem thermoplastischen organischen Kunststoffmaterial, einem beschichteten Textilmaterial oder Cellulose ist und eine Wurstware umschließt, dass die Verbindungsfläche kleiner/gleich der der Hülle zugewandten Fläche des Funktionselements ist und dass die Bestückungs-/Klebemittelvorrichtung punktweise, linienförmig oder flächig Klebemittel auf die Verbindungsfläche aufbringt, dass die oberhalb der Transportvorrichtung (7) angeordnete Bestückungs-/Klebemittelvorrichtung (1) eine Klebemitteleinrichtung (22), eine Greifvorrichtung (16) und einen Elementspender (11) für die Funktionselemente (6) umfaßt und dass die Klebemitteleinrichtung (22) auf eine geschlossene Verbindungsfläche (4) auf der Hülle (2) Klebemittel (5) aufträgt, bevor das Funktionselement (6) mit der Verbindungsfläche in Druckkontakt tritt, wobei das Funktionselement eine Aufreißlasche zum Öffnen der Hülle (2), eine Halterung zur hängenden Lagerung eines Produkts (3) oder eine wiederverschließbare Abdeckung ist.

2. Vorrichtung nach Anspruch 1, **dadurch gekennzeichnet, dass** die Transportvorrichtung (7) ein Förderband ist.

3. Vorrichtung nach Anspruch 1, **dadurch gekennzeichnet, dass** die Transportvorrichtung (7) aus einer oder mehreren umlaufenden, gleichartigen Paletten (9) besteht und dass die Paletten (9) mit einer oder mehreren, in regelmäßigen Abständen und parallel zueinander positionierten Halterungen (10) ausgestattet sind, die die Produkte (3) formschlüssig aufnehmen.

4. Vorrichtung nach Anspruch 1, **dadurch gekennzeichnet, dass** die Transportvorrichtung (7) aus einem oder mehreren Modulbändern besteht, und dass die Modulbänder mit Formschultern zur parallelen und regelmäßig beabstandeten Positionierung der Produkte (3) ausgerüstet sind.

5. Vorrichtung nach Anspruch 1, **dadurch gekennzeichnet, dass** die Aufreißlasche biegesteif ist.

6. Vorrichtung nach Anspruch 1, **dadurch gekennzeichnet, dass** die Halterung eine Schlaufe zur hängenden Lagerung des Produkts (3) ist.

7. Vorrichtung nach Anspruch 1, **dadurch gekennzeichnet, dass** die wiederverschließbare Abdeckung eine selbstklebende Lasche ist.

8. Verfahren zum vollautomatischen Aufbringen und Fixieren eines Funktionselements auf einer, ein Produkt umschließenden Hülle, **dadurch gekennzeichnet, dass** die Hülle ein Folienschlauch aus einem thermoplastischen organischen Kunststoffmaterial, einem beschichteten Textilmaterial oder Cellulose ist und eine Wurstware umschließt und dass eine oberhalb einer Transportvorrichtung (7) für die Produkte (3) angeordnete Bestückungs-/Klebemittelvorrichtung (1) auf eine geschlossene Verbindungsfläche auf der Hülle (2) eines Produkts (3) punktweise, linienförmig oder flächig Klebemittel (7) auf trägt, dass daran anschließend ein Funktionselement (6) an die Verbindungsfläche angedrückt wird und dass die der Hülle (2) zugewandte Fläche des Funktionselements (6) punktweise, linienförmig, teil- oder ganzflächig mit der Hülle permanent kraftschlüssig haftend verbunden wird, wobei das Funktionselement eine Aufreißlasche zum Öffnen der Hülle (2), eine Halterung zur hängenden Lagerung eines Produkts (3) oder eine wiederverschließbare Abdeckung ist.

9. Verfahren nach Anspruch 8, **dadurch gekennzeichnet, dass** mittels einer Bestückungs-/Klebemittelvorrichtung (1) Klebemittel (5) auf eine Verbindungsfläche (4) auf der Hülle (2) aufgebracht wird, daran anschließend das Funktionselement (6) mit der Verbindungsfläche (4) in Druckkontakt gebracht wird, und das Produkt (3) während des Aufbringens und Fixieren des Funktionselements (6) lagefest gehalten wird.

10. Verfahren nach Anspruch 9, **dadurch gekennzeichnet, dass** das Produkt (3) mittels einer Transportvorrichtung (7) zu der Bestückungs-/Klebemittelvorrichtung (1) geführt und nach dem Aufbringen und Fixieren des Funktionselements (6) auf der Hülle (2) weiter transportiert wird.

11. Verfahren nach Anspruch 9, **dadurch gekennzeichnet, dass** das Klebemittel (5) mittels einer oder mehrerer Düsen (23) punkt-, linien- oder flächenförmig auf die Hülle (2) aufgetragen wird.

12. Verfahren nach Anspruch 9 , **dadurch gekennzeichnet, dass** das Funktionselement (6) mittels einer verfahr- und verschwenkbaren Greifvorrichtung (16) aus einem Elementspender (11) entnommen und mit der Verbindungsfläche (4) in Druckkontakt gebracht wird.

## Claims

1. An apparatus for fully automatically applying and fixing a functional element (6) with mechanical functionality to a sheath (2) which encloses a product (3), the apparatus comprising a transporting apparatus (7) for the product and a fitting-out/adhesive-medium apparatus (1), by means of which an adhesive medium (5) can be applied to a connecting surface (4) on the sheath, wherein the sheath is a sheet-material tube made of an organic thermoplastic material, a coated textile material or cellulose and encloses sausagemeat, wherein the connecting surface is smaller than/equal to that surface of the functional element which is directed towards the sheath, and wherein the fitting-out/adhesive-medium apparatus applies adhesive medium to the connecting surface in a spotwise or linear manner or over a surface area, wherein the fitting-out/adhesive-medium apparatus (1), which is arranged above the transporting apparatus (7), comprises an adhesive-medium device (22), a gripping means (16) and an element dispenser (11) for the functional elements (6), and wherein the adhesive-medium device (22) applies adhesive medium (5) to a closed connecting surface (4) on the sheath (2) before the functional element (6) comes into pressure-exerting contact with the connecting surface, the functional element being a tear-open tab for opening the sheath (2), a holder for storing a product (3) in a hanging state, or a recloseable covering.

2. The apparatus as claimed in claim 1, wherein the transporting apparatus (7) is a conveying belt.

3. The apparatus as claimed in claim 1, wherein the transporting apparatus (7) comprises one or more circulating, identical pallets (9), and wherein the pallets (9) are equipped with one or more holders (10) which are spaced apart at regular intervals, are positioned parallel to one another and accommodate the products (3) in a form-fitting manner.

4. The apparatus as claimed in claim 1, wherein the transporting apparatus (7) comprises one or more modular belts, and wherein the modular belts are equipped with forming shoulders for positioning the products (3) in a parallel state and at regular intervals.

5. The apparatus as claimed in claim 1, wherein the tear-open tab is flexurally rigid.

6. The apparatus as claimed in claim 1, wherein the holder is a loop for storing the product (3) in a hanging state.

7. The apparatus as claimed in claim 1, wherein the recloseable covering is a self-adhesive tab.

8. A method of fully automatically applying and fixing a functional element to a sheath which encloses a product, wherein the sheath is a sheet-material tube made of an organic thermoplastic material, a coated textile material or cellulose and encloses sausagemeat, and wherein a fitting-out/adhesive-medium apparatus (1), which is arranged above a transporting apparatus (7) for the products (3), applies adhesive medium (7) to a closed connecting surface on the sheath (2) of a product (3) in a spotwise or in a linear manner or over a surface area, wherein a functional element (6) is then pressed against the connecting surface, and wherein that surface of the functional element (6) which is directed towards the sheath (2) is connected to the sheath with permanently force-fitting adhesion in a spotwise or linear manner or over part of, or the entire, surface area, wherein the functional element is a tear-open tab for opening the sheath (2), a holder for storing a product (3) in a hanging state, or a recloseable covering.

9. A method as claimed in Claim 8, wherein adhesive medium (5) is applied to a connecting surface (4) on the sheath (2) by means of a fitting-out/adhesive-medium apparatus (1), then the functional element (6) is brought into pressure-exerting contact with the connecting surface (4), and the product (3) is retained in a fixed position as the functional element (6) is being applied and fixed.

10. A method as claimed in claim 9, wherein a transporting apparatus (7) guides the product (3) to the fitting-out/adhesive-medium apparatus (1) and transports the same further once the functional element (6) has been applied and fixed to the sheath (2).

11. The method as claimed in claim 9, wherein the adhesive medium (5) is applied to the sheath (2) in a spotwise or linear manner, or over a surface area, by means of one or more nozzles (23).

12. The method as claimed in claim 9, wherein the functional element (6) is removed from an element dispenser (11), and brought into pressure-exerting contact with the connecting surface (4), by way of a displaceable and pivotable gripping means (16).

## Revendications

1. Dispositif permettant d'appliquer et de fixer de manière tout à fait automatique un élément fonctionnel (6) à fonctionnalité mécanique sur une enveloppe (2) entourant un produit (3), comprenant un dispositif de transport (7) pour le produit et un dispositif d'équipement et de collage (1), avec lequel un adhésif (5) peut être appliqué sur une surface de liaison (4) de l'enveloppe, **caractérisé en ce que** l'enveloppe est un tube de film constitué d'une matière plastique organique thermoplastique, d'un matériau textile revêtu ou de cellulose et entoure une saucisse, **en ce que** la surface de liaison est inférieure ou égale à celle de la surface de l'élément fonctionnel tournée vers l'enveloppe et **en ce que** le dispositif d'équipement et de collage applique l'adhésif sur la surface de liaison en mode ponctuel, en mode linéaire ou à plat, **en ce que** le dispositif d'équipement et de collage (1) aménagé au-dessus du dispositif de transport (7) comprend un dispositif de collage (22), un dispositif de préhension (16) et un distributeur d'éléments (11) pour les éléments fonctionnels (6) et **en ce que** le dispositif de collage (22) applique sur une surface de liaison fermée (4) de l'enveloppe (2) de l'adhésif (5) avant que l'élément fonctionnel (6) n'entre en contact de pression avec la surface de liaison, l'élément fonctionnel étant une attache d'ouverture pour ouvrir l'enveloppe (2), un support pour suspendre un produit (3) ou une coiffe refermable.

2. Dispositif selon la revendication 1, **caractérisé en ce que** le dispositif de transport (7) est une bande transporteuse.

3. Dispositif selon la revendication 1, **caractérisé en ce que** le dispositif de transport (7) est constitué d'une ou plusieurs palettes rotatives similaires (9) et **en ce que** les palettes (9) sont équipées d'un ou plusieurs supports (10) positionnés à distances régulières parallèlement l'une à l'autre, lesquels supports reçoivent les produits (3) de façon mécanique.

4. Dispositif selon la revendication 1, **caractérisé en ce que** le dispositif de transport (7) est constitué d'un ou plusieurs rubans modulaires et **en ce que** les rubans modulaires sont équipés d'épaulements de forme pour le positionnement parallèle et espacé régulièrement des produits (3).

5. Dispositif selon la revendication 1, **caractérisé en ce que** l'attache d'ouverture résiste à la flexion.

6. Dispositif selon la revendication 1, **caractérisé en ce que** le support est une boucle pour suspendre le produit (3).

7. Dispositif selon la revendication 1, **caractérisé en ce que** la coiffe refermable est une attache autocollante.

8. Procédé d'application et de fixation de manière tout à fait automatique d'un élément fonctionnel sur une enveloppe entourant un produit, **caractérisé en ce que** l'enveloppe est un tube de film constitué d'une matière plastique organique thermoplastique, d'un matériau textile revêtu ou de cellulose et entoure une saucisse et **en ce qu'**un dispositif d'équipement et de collage (1) agencé au-dessus d'un dispositif de transport (7) pour les produits (3) applique un adhésif (5) sur une surface de liaison fermée de l'enveloppe (2) d'un produit (3) en mode ponctuel, en mode linéaire ou à plat, **en ce que**, ensuite, un élément fonctionnel (6) est pressé sur la surface de liaison et **en ce que** la surface de l'élément fonctionnel (6) tournée vers l'enveloppe (2) est liée par adhérence permanente à l'enveloppe en mode ponctuel, en mode linéaire, à plat en partie ou en totalité à l'enveloppe, l'élément fonctionnel étant une attache d'ouverture pour ouvrir l'enveloppe (2), un support pour suspendre un produit (3) ou une coiffe refermable.

9. Procédé selon la revendication 8, **caractérisé en ce que**, au moyen d'un dispositif d'équipement et de collage (1), on applique un adhésif (5) sur une surface de liaison (4) de l'enveloppe (2), puis on amène l'élément fonctionnel (6) en contact de pression avec la surface de liaison (4) et le produit (3) est maintenu solidement en place au cours de l'application et de la fixation de l'élément fonctionnel (6).

10. Procédé selon la revendication 9, **caractérisé en ce que** le produit (3) est guidé au moyen d'un dispositif de transport (7) vers le dispositif d'équipement et de collage (1) et à nouveau transporté après application et fixation de l'élément fonctionnel (6) sur l'enveloppe (2).

11. Procédé selon la revendication 9, **caractérisé en ce que** l'adhésif (5) est appliqué au moyen d'une ou plusieurs buses (23) sur l'enveloppe (2) en mode ponctuel, linéaire ou à plat.

12. Procédé selon la revendication 9, **caractérisé en ce que** l'élément fonctionnel (6) est prélevé d'un distributeur d'éléments (11) au moyen d'un dispositif de préhension (16) déplaçable et pivotant et est appliqué en contact de pression avec la surface de liaison (4).
